(19) Europäisches Patentamt
European Patent Office
Office européen des brevets

(11) **EP 3 523 848 B1**

(12) **EUROPÄISCHE PATENTSCHRIFT**

(45) Veröffentlichungstag und Bekanntmachung des Hinweises auf die Patenterteilung:
**02.12.2020   Patentblatt 2020/49**

(21) Anmeldenummer: **16790891.2**

(22) Anmeldetag: **05.10.2016**

(51) Int Cl.:
*H01M 4/134* (2010.01)     *H01M 4/38* (2006.01)
*H01M 10/052* (2010.01)     *H01M 10/0567* (2010.01)
*H01M 10/0568* (2010.01)     *H01M 4/02* (2006.01)

(86) Internationale Anmeldenummer:
**PCT/EP2016/073770**

(87) Internationale Veröffentlichungsnummer:
**WO 2018/065046 (12.04.2018 Gazette 2018/15)**

(54) **LITHIUM-IONEN-BATTERIEN**

LITHIUM ION BATTERIES

BATTERIES LITHIUM-ION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**14.08.2019   Patentblatt 2019/33**

(73) Patentinhaber: **Wacker Chemie AG**
**81737 München (DE)**

(72) Erfinder:
• **BRÄUNLING, Daniel**
  **84489 Burghausen (DE)**

• **HAUFE, Stefan**
  **85579 Neubiberg (DE)**

(74) Vertreter: **Ege, Markus et al**
**Wacker Chemie AG**
**Hanns-Seidel-Platz 4**
**81737 München (DE)**

(56) Entgegenhaltungen:
**WO-A1-2014/195407     WO-A1-2015/160773**
**DE-A1-102014 202 180**

## Beschreibung

Die Erfindung betrifft Lithium-Ionen-Batterien mit Silicium enthaltenden Anodenmaterialien.

Wiederaufladbare Lithium-Ionen-Batterien sind heute die praxistauglichen elektrochemischen Energiespeicher mit den höchsten gravimetrischen Energiedichten von beispielsweise bis zu 250 Wh/kg.

Die Elektrolyte von Lithium-Ionen-Batterien enthalten als Hauptkomponente im Allgemeinen cyclische/aliphatische Carbonate, wie beispielsweise die in US 7476469 genannten Methyl- oder Ethyl-Carbonate. Weiterer Bestandteil von Elektrolyten sind vielfach Filmbildungsadditive, wie das Vinylencarbonat (VC) oder die fluorhaltigen Carbonate aus DE 102013210631. Auch Nitrile oder Amine werden als Elektrolytadditive empfohlen, wie beispielsweise in DE 69027143, US 8551661 oder Gu-Yeon Kim and J.R. Dahn, Journal of The Electrochemical Society, 162 (3) A437 bis A447 (2015). Der Zusatz von Nitrat-Salzen ist beispielsweise aus US 2006222944, US 7476469, WO 2015160773 oder Etacheri, Vinodkumar et al., Langmuir 2012, 28, 6175 bis 6184 bekannt. DE 102013210631 lehrt, dass durch Kombination von Lithiumnitrat und bestimmten Filmbildungsadditiven die Zyklen-Beständigkeit verbessert werden kann.

Als Material für die negative Elektrode ("Anode") für Lithium-Ionen-Batterien ist graphitischer Kohlenstoff weit verbreitet. Nachteilig ist jedoch seine relativ niedrige elektrochemische Kapazität von theoretisch höchstens 372 mAh pro Gramm Graphit, die nur etwa ein Zehntel der mit Lithiummetall theoretisch erreichbaren elektrochemischen Kapazität entspricht. Zur Lösung dieses Problems ist Silicium als alternatives Anodenaktivmaterial empfohlen worden. Silicium bildet mit Lithium binäre elektrochemisch aktive Legierungen, die einen sehr hohen Lithiumgehalt aufweisen können. Das bekannte Maximum an Lithiumgehalt findet man bei $Li_{4.4}Si$, was einer sehr hohen theoretischen spezifischen Kapazität im Bereich von 4200 mAh pro Gramm Silicium entspricht.

Nachteiligerweise geht das Ein- und Auslagern von Lithium in Silicium mit einer sehr starken Volumenänderung von Silicium einher, was 300% erreichen kann. Die Volumenausdehnung führt zu einer starken mechanischen Belastung der Kristallite, die schließlich zu deren Auseinanderbrechen führt. Dieser als elektrochemisches Mahlen bezeichnete Prozess führt im Aktivmaterial und in der Elektrodenstruktur zu einem Verlust der elektrischen Kontaktierung und damit zur Zerstörung der Elektrode unter Kapazitätsverlust. Die Abnahme der Kapazität im Laufe mehrerer Lade- und Entladezyklen wird als Fading oder kontinuierlicher Kapazitätsverlust bezeichnet und ist in der Regel irreversibel.

Zur Reduzierung der mechanischen Beanspruchung und damit zur Verhinderung der elektrochemischen Mahlung wurde vielfach der Einsatz von nanoskaligen oder nanostrukturierten Siliciumpartikeln für das Anodenmaterial von Lithium-Ionen-Zellen empfohlen, wie beispielsweise in der WO 2014/202529 oder der EP 1730800 beschrieben. Die nanoskaligen Siliciumpartikel der EP 1730800 sind hierbei zu Aggregaten zusammengelagert.

M. Gauthier diskutiert im Journal of Power Sources, 256, 2014, Seiten 32 bis 36, Anodenmaterial mit Siliciumpartikeln, die durch sehr breite, mehrmodale Größenverteilungen und erhebliche Grobanteile charakterisiert sind. Die beschriebenen Halbzellen erreichen noch nicht die in der Praxis geforderte Coulomb-Effizienz. Auch US 2003235762 beschreibt Siliciumpartikel mit erheblichen Grobanteilen, ohne Angaben zum Herstellprozess der Siliciumpartikel zu machen. Damit sind die Kornform und die Sphärizität der Siliciumpartikel oder nicht-aggregierte Siliciumpartikel implizit nicht offenbart. Das Aktivmaterial der US 2009305129 Schrift enthält Siliciumpartikel mit Kristallitgrößen von < 100 nm und Partikelgrößen von 7 bis 25 $\mu$m, die über Gasphasenprozesse hergestellt wurden.

US 2005/0214646 beschreibt Batterien, deren Anodenmaterial im beladenen Zustand ein Lithium/Silicium-Verhältnis von höchstens 4,0 hat. Konkret beschrieben sind molare Li/Si-Verhältnisse von 3,5 und größer. JP 4911835 verwendet Li/Si-Verhältnisse für das Anodenmaterial geladener Lithium-Ionen-Batterien im Bereich von 2,3 bis 4,0.

Bisher bekannte Silicium enthaltende Lithium-Ionen-Batterien zeigen weiterhin zu hohe initiale und/oder kontinuierliche Kapazitätsverluste. Initiale Kapazitätsverluste erleiden Lithium-Ionen-Batterien, da bei ihrem erstmaligen Laden die Oberfläche des Silicium-Anodenmaterials mit Bestandteilen des Elektrolyten unter Bildung passivierender Schutzschichten (Solid Electrolyte Interface; SEI) reagiert, was zu einer Immobilisierung von Lithium und damit zu einer Beschränkung der Kapazität der Batterie führt. Kontinuierliche Kapazitätsverluste gehen auf Volumenänderungen der Siliciumpartikel bei weiteren Auf- beziehungsweise Entladezyklen der Lithium-Ionen-Batterien und der damit verbundenen mechanischen Zermürbung der Anode zurück, da hierbei neue Siliciumoberflächen freigelegt werden, die wiederum mit Bestandteilen des Elektrolyten unter weiterer SEI-Bildung reagieren, was zu einer Immobilisierung von weiterem Lithium und einem kontinuierlichen Anstieg des Widerstandes auf der Anodenseite führt. Da in der Vollzelle die Menge an mobilem Lithium, welches der nutzbaren Kapazität entspricht, begrenzt ist, wird dieses schnell verbraucht und die Kapazität der Zelle nach zu wenigen Zyklen abgebaut. Der Rückgang der reversiblen Kapazität der Lithium-Ionen-Batterien während der fortgesetzten Zyklen wird auch als Fading bezeichnet.

Vor diesem Hintergrund bestand die Aufgabe der vorliegenden Erfindung darin, Lithium-Ionen-Batterien mit Siliciumpartikel enthaltenden Anoden bereitzustellen, die eine hohe initiale reversible Kapazität und in den Folgezyklen ein stabiles elektrochemisches Verhalten mit möglichst geringem Rückgang der reversiblen Kapazität (Fading) aufweisen.

Ein Gegenstand der Erfindung sind Lithium-Ionen-Batterien umfassend Kathode, Siliciumpartikel enthaltende Anode, Separator und Elektrolyt, dadurch gekennzeichnet, dass der Elektrolyt ein oder mehrere anorganische Salze enthält ausgewählt aus der Gruppe umfassend Alkali- und Ammonium-Salze von Nitrat ($NO_3^-$) und Nitrit ($NO_2^-$); und das Material der Anode (Anodenmaterial) in der vollständig geladenen Lithium-Ionen-Batterie nur teilweise lithiiert ist, mit der Maßgabe, dass im teilweise lithiierten Anodenmaterial der vollständig geladenen Lithium-Ionen-Batterie das Verhältnis der Lithiumatome zu den Siliciumatomen ≤ 2,2 ist.

Erfindungswesentlich ist also, dass das Anodenmaterial, insbesondere die Siliciumpartikel, in der vollständig geladenen Lithium-Ionen-Batterie nur teilweise lithiiert ist. Vollständig geladen bezeichnet den Zustand der Batterie, in dem das Anodenmaterial der Batterie ihre höchste Beladung an Lithium aufweist. Teilweise Lithiierung des Anodenmaterials bedeutet, dass das maximale Lithiumaufnahmevermögen der Siliciumpartikel im Anodenmaterial nicht ausgeschöpft wird. Das maximale Lithiumaufnahmevermögen der Siliciumpartikel entspricht allgemein der Formel $Li_{4,4}Si$ und beträgt somit 4,4 Lithiumatome pro Siliciumatom. Dies entspricht einer maximalen spezifischen Kapazität von 4200 mAh pro Gramm Silicium.

Das Verhältnis der Lithiumatome zu den Siliciumatomen in der Anode einer Lithium-Ionen-Batterie (Li/Si-Verhältnis) kann beispielsweise über den elektrischen Ladungsfluss eingestellt werden. Der Lithiierungsgrad des Anodenmaterials beziehungsweise der im Anodenmaterial enthaltenen Siliciumpartikel ist proportional zur geflossenen elektrischen Ladung. Bei dieser Variante wird beim Laden der Lithium-Ionen-Batterie die Kapazität des Anodenmaterials für Lithium nicht voll ausgeschöpft. Dies resultiert in einer teilweisen Lithiierung der Anode.

Bei einer alternativen, bevorzugten Variante wird das Li/Si-Verhältnis einer Lithium-Ionen-Batterie durch das Zellbalancing eingestellt. Hierbei werden die Lithium-Ionen-Batterien so ausgelegt, dass das Lithiumaufnahmevermögen der Anode vorzugsweise größer ist als das Lithiumabgabevermögen der Kathode. Dies führt dazu, dass in der vollständig geladenen Batterie das Lithiumaufnahmevermögen der Anode nicht voll ausgeschöpft ist, d.h. dass das Anodenmaterial nur teilweise lithiiert ist.

Bei der erfindungsgemäßen teilweisen Lithiierung beträgt das Li/Si-Verhältnis im Anodenmaterial im vollständig geladenen Zustand der Lithium-Ionen-Batterie ≤ 2,2, bevorzugt ≤ 1,98 und am meisten bevorzugt ≤ 1,76. Das Li/Si-Verhältnis im Anodenmaterial im vollständig geladenen Zustand der Lithium-Ionen-Batterie ist vorzugsweise ≥ 0,22, besonders bevorzugt ≥ 0,44 und am meisten bevorzugt ≥ 0,66.

Die Kapazität des Siliciums des Anodenmaterials der Lithium-Ionen-Batterie wird vorzugsweise zu ≤ 50%, besonders bevorzugt zu ≤ 45% und am meisten bevorzugt zu ≤ 40% genutzt, bezogen auf eine Kapazität von 4200 mAh pro Gramm Silicium.

Der Lithiierungsgrad von Silicium beziehungsweise die Ausnutzung der Kapazität von Silicium für Lithium (Si-Kapazitätsnutzung $\alpha$) kann beispielsweise an Hand folgender Formel bestimmt werden:

$$\alpha = \frac{\beta}{\gamma \cdot FG \cdot \omega_{Si}}$$

$\beta$: Delithiierungs-Kapazität der Si-haltigen Anode bei der jeweiligen Ladeschlussspannung der Lithium-Ionen-Batterie;
$\gamma$: maximale Kapazität von Silicium für Lithium bei einer Stöchiometrie von $Li_{22}Si_5$ (entspricht 4200 mAh/g);
FG: Flächengewicht der Anodenbeschichtung;
$\omega_{Si}$: Si-Gewichtsanteil in der Anodenbeschichtung.

Bestimmung der Delithiierungs-Kapazität $\beta$:

Zuerst wird die Lithium-Ionen-Batterie in den elektrisch geladenen Zustand überführt, indem sie nach dem cc-Verfahren (constant current) mit konstantem Strom von 5 mA/g (entspricht C/25) bis zum Erreichen der Spannungsgrenze von 4,2 V geladen wird. Hierbei wird die Anode lithiiert. Die so geladene Lithium-Ionen-Batterie wird geöffnet, die Anode entnommen und mit dieser eine Knopf-Halbzelle (Typ CR2032, Hohsen Corp.) mit Lithium-Gegenelektrode (Rockwood Lithium, Dicke 0,5 mm, Dm = 15 mm) aufgebaut. Ein mit 120 $\mu$l Elektrolyt getränktes Glasfaser-Filterpapier (Whatman, GD Type D) kann als Separator (Dm = 16 mm) dienen. Als Elektrolyt wird eine 1,0-molare Lösung von Lithiumhexafluorophosphat in einem 3:7 (v/v) Gemisch von Fluorethylencarbonat und Ethylmethylcarbonat eingesetzt, welche mit 2,0 Gew.-% Vinylencarbonat versetzt ist. Der Bau der Zelle erfolgt im Allgemeinen in einer Glovebox (< 1 ppm an $H_2O$ und $O_2$ in der Glovebox-Atmosphäre). Der Wassergehalt der Trockenmasse aller Einsatzstoffe liegt vorzugsweise unterhalb von 20 ppm.

Die Delithiierungs-Kapazität $\beta$ der Si-haltigen Anodenbeschichtung wird bestimmt durch Laden der so hergestellten Knopf-Halbzelle (Arbeitselektrode = positive Elektrode = Si-Anode; Gegenelektrode = negative Elektrode = Lithium) mit C/25 bis Erreichen der Spannungsgrenze von 1,5 V. Die elektrochemischen Messungen an Voll- und Halbzelle werden bei 20°C durchgeführt. Der oben genannte konstante Strom bezieht sich auf das Gewicht der Beschichtung der positiven Elektrode.

Bestimmung des Si-Gewichtsanteils $\omega_{Si}$:

Aus einer Probe der vollständig delithiierten Anodenbeschichtung (ohne Cu-Folie) wird zunächst Elektrolyt mit Tetrahydrofuran ausgewaschen. Anschließend wird eine Probe sauer aufgeschlossen. Dazu werden 75 mg der Anodenbeschichtung in ein Mikrowellenaufschlussgefäß (100 ml TFM-Liner von Anton-Paar) überführt und mit 5 ml HNO$_3$ (65%ig, p.a.), 0,25 ml HCl (37%ig, p.a.) und 1 ml HF (40%ig, suprapur) versetzt. Das Mikrowellenaufschlussgefäß wird verschlossen, in ein Mikrowellengerät (Multiwave 3000 Anton Paar) gegeben und für 45 min bei 950 W behandelt. Der Aufschluss wird vollständig in 50 ml Tubes überführt und mit Wasser auf 50 ml aufgefüllt. Davon werden 0,50 ml entnommen, mit 2,50 ml 4%iger Borsäure versetzt und wieder auf 50 ml aufgefüllt (Verdünnung: Faktor 100). Der Si-Gewichtsanteil $\omega_{Si}$ wird bestimmt mittels ICP-OES (inductively coupled plasma)-Emissionspektrometrie (Messgerät: Optima 7300 DV, Fa. Perkin Elmer; Probeneinführungssystem: Zerstäuber Meinhard mit Zyklonsprühkammer; Kalibrierbereich: 0,1 bis 20,0 mg/1 Si; Si-Standard-Stammlösung Certipur von Merck mit 1000 mg/1 Si (zertifiziert)).

Die Elektrolyte enthalten ein oder mehrere anorganische Salze ausgewählt aus der Gruppe umfassend Alkali- und Ammonium-Salze von Nitrat (NO$_3^-$) und Nitrit (NO$_2^-$).

Bevorzugt sind Alkali-Salze, insbesondere Lithium-Salze. Bevorzugt sind auch Nitrate. Bevorzugte Nitrate sind Natrium-Nitrat, Kalium-Nitrat, Ammonium-Nitrat, Tetrabutylammonium-Nitrat und Lithium-Nitrat. Besonders bevorzugt ist Lithium-Nitrat.

Die anorganischen Salze sind im Elektrolyt im Allgemeinen schlecht löslich. Die Löslichkeit der anorganischen Salze im Elektrolyt beträgt unter Normalbedingungen nach DIN 50014 (23/50) vorzugsweise < 1 Gew.-%, besonders bevorzugt ≤ 0,8 Gew.-% und am meisten bevorzugt ≤ 0,5 Gew.-%.

Die anorganischen Salze sind im Elektrolyt zu vorzugsweise 0,01 bis 10 Gew.-%, besonders bevorzugt 0,01 bis 5 Gew.-% und am meisten bevorzugt 0,01 bis 1 Gew.-% enthalten, bezogen auf das Gesamtgewicht des Elektrolyten.

Die Konzentration der anorganischen Salze im Elektrolyt ist vorzugsweise 0,01 bis 2 molar, besonders bevorzugt 0,01 bis 1 molar, noch mehr bevorzugt 0,02 bis 0,5 molar und am meisten bevorzugt 0,03 bis 0,3 molar.

Des Weiteren kann der Elektrolyt zusätzlich ein oder mehrere aprotische Lösungsmittel, ein oder mehrere lithiumhaltige Leitsalze, gegebenenfalls Filmbildner und gegebenenfalls ein oder mehrere Additive enthalten.

Lithiumhaltige Leitsalze werden vorzugsweise ausgewählt aus der Gruppe umfassend LiPF$_6$, LiBF$_4$, LiClO$_4$, LiAsF$_6$, (LiB(C$_2$O$_4$)$_2$, LiBF$_2$(C$_2$O$_4$)), LiSO$_3$C$_x$F$_{2x+1}$, LiN(SO$_2$C$_x$F$_{2x+1}$)$_2$ und LiC(SO$_2$CxF$_{2x+1}$)$_3$, wobei x ganzzahlige Werte von 0 bis 8 einnimmt, und deren Mischungen.

Die lithiumhaltigen Leitsalze sind von den erfindungswesentlichen anorganischen Salzen verschieden.

Die lithiumhaltigen Leitsalze sind im Elektrolyt im Allgemeinen gut löslich. Die Löslichkeit der lithiumhaltigen Leitsalze im Elektrolyt beträgt unter Normalbedingungen nach DIN 50014 (23/50) vorzugsweise ≥ 1 Gew.-% und besonders bevorzugt 10 bis 12 Gew.-%.

Der Elektrolyt enthält vorzugsweise 1 bis 50 Gewichtsteile, besonders bevorzugt 5 bis 30 Gewichtsteile und am meisten bevorzugt 10 bis 20 Gewichtsteile lithiumhaltiges Leitsalz.

Die lithiumhaltigen Leitsalze sind im Elektrolyt zu vorzugsweise ≥ 1 Gew.-%, besonders bevorzugt 1 bis 20 Gew.-% und am meisten bevorzugt 10 bis 15 Gew.-% enthalten, bezogen auf das Gesamtgewicht des Elektrolyten.

Die Konzentration der lithiumhaltigen Leitsalze im Elektrolyt ist vorzugsweise 0,5 bis 1,5 molar und besonders bevorzugt 0,8 bis 1,2 molar.

Das molare Verhältnis der lithiumhaltigen Leitsalze zu den erfindungswesentlichen anorganischen Salzen beträgt vorzugsweise 1 zu 1 bis 20 zu 1, besonders bevorzugt 1 zu 1 bis 15 zu 1 und am meisten bevorzugt 5 zu 1 bis 15 zu 1.

Das aprotische Lösungsmittel wird vorzugsweise ausgewählt aus der Gruppe umfassend organische Carbonate, wie Dimethylcarbonat, Diethylcarbonat, Ethylmethylcarbonat, Ethylencarbonat, Vinylencarbonat, Propylencarbonat, Butylencarbonat; cyclische und lineare Ester, wie Methylacetat, Ethylacetat, Butylacetat, Propylpropionat, Ethylbutyrat, Ethyl-isobutyrat; cyclische und lineare Ether, wie 2-Methyltetrahydrofuran, 1,2-Diethoxymethan, THF, Dioxan, 1,3-Dioxolan, Diisopropylether, Diethylenglycoldimethylether; Ketone, wie Cyclopentanon, Di-isopropylketon, Methyl-isobutylketon; Lactone, wie γ-Butyrolacton; Sulfolan, Dimethylsulfoxid, Formamid, Dimethylformamid, 3-Methyl-1,3-oxazolidine-2-on und Gemischen dieser Lösungsmittel. Besonders bevorzugt sind die vorstehend beschriebenen organischen Carbonate.

Der Elektrolyt enthält vorzugsweise 100 Gewichtsteile aprotisches Lösungsmittel.

Beispiele für Filmbildner sind Vinylencarbonat und Fluorethylencarbonat. Der Elektrolyt kann beispielsweise 5 bis 100 Gewichtsteile, bevorzugt 10 bis 70 Gewichtsteile, mehr bevorzugt 20 bis 50 Gewichtsteile und noch mehr bevorzugt 12 bis 30 Gewichtsteile Filmbildner enthalten. Vorzugsweise enthält der Elektrolyt ≤ 10 Gew.-%, besonders bevorzugt ≤ 2 Gew.-% und noch mehr bevorzugt ≤ 0,5 Gew.-% Filmbildner, bezogen auf das Gesamtgewicht des Elektrolyten. Am meisten bevorzugt enthält der Elektrolyt keinen Filmbildner.

Beispiele für Elektrolyt-Additive sind organische Isocyanate, beispielsweise zur Herabsetzung des Wassergehaltes, HF-Abfänger, Lösungsvermittler für LiF, organische Lithiumsalze, Komplexsalze, Amine, wie Tributylamin, Tripentylamin, Trihexylamin oder Triisooctylamin, und/oder Nitrile, wie Capronsäurenitril, Valeronitril oder 3-(Fluoro-dimethyl-silyl)-butannitril.

Das Anodenmaterial enthält Siliciumpartikel.

Die volumengewichtete Partikelgrößenverteilung der Siliciumpartikel liegt vorzugsweise zwischen den Durchmesser-Perzentilen $d_{10} \geq 0,2\ \mu m$ und $d_{90} \leq$

20,0 $\mu$m, besonders bevorzugt zwischen $d_{10} \geq 0,2$ $\mu$m und $d_{90} \leq 10,0$ $\mu$m und am meisten bevorzugt zwischen $d_{10} \geq 0,2$ $\mu$m bis $d_{90} \leq 5,0$ $\mu$m. Die Siliciumpartikel haben eine volumengewichtete Partikelgrößenverteilung mit Durchmesser-Perzentilen $d_{10}$ von vorzugsweise $\leq 10$ $\mu$m, besonders bevorzugt $\leq 5$ $\mu$m, noch mehr bevorzugt $\leq 3$ $\mu$m und am meisten bevorzugt $\leq 1$ $\mu$m. Die Siliciumpartikel haben eine volumengewichtete Partikelgrößenverteilung mit Durchmesser-Perzentilen $d_{90}$ von vorzugsweise $\geq 0,5$ $\mu$m. In einer Ausführungsform der vorliegenden Erfindung ist der vorgenannte $d_{90}$-Wert vorzugsweise $\geq 5$ $\mu$m.

Die volumengewichtete Partikelgrößenverteilung der Siliciumpartikel hat eine Breite $d_{90}$-$d_{10}$ von vorzugsweise $\leq 15,0$ $\mu$m, mehr bevorzugt $\leq 12,0$ $\mu$m, noch mehr bevorzugt $\leq 10,0$ $\mu$m, besonders bevorzugt $\leq 8,0$ $\mu$m und am meisten bevorzugt $\leq 4,0$ $\mu$m. Die volumengewichtete Partikelgrößenverteilung der Siliciumpartikel hat eine Breite $d_{90}$-$d_{10}$ von vorzugsweise $\geq 0,6$ $\mu$m, besonders bevorzugt $\geq 0,8$ $\mu$m und am meisten bevorzugt $\geq 1,0$ $\mu$m.

Die volumengewichtete Partikelgrößenverteilung der Siliciumpartikel weist Durchmesser-Perzentilen $d_{50}$ von vorzugsweise 0,5 bis 10,0 $\mu$m, besonders bevorzugt 0,6 bis 7,0 $\mu$m, noch mehr bevorzugt 2,0 bis 6,0 $\mu$m und am meisten bevorzugt 0,7 bis 3,0 $\mu$m auf.

Das Zweifache bis Fünffache, insbesondere das Zweifache bis Dreifache der vorgenannten $d_{50}$-Werte ist vorzugsweise kleiner als die Schichtdicke der Anodenbeschichtung. Die Schichtdicke der Anodenbeschichtung ist weiter unten angegeben. Diese Maßgabe ist hilfreich, um Überkorn praktisch auszuschließen.

Die volumengewichtete Partikelgrößenverteilung der Siliciumpartikel ist bestimmbar durch statische Laserstreuung unter Anwendung des Mie-Modells mit dem Messgerät Horiba LA 950 mit Ethanol als Dispergiermedium für die Siliciumpartikel.

Die volumengewichtete Partikelgrößenverteilung der Siliciumpartikel ist vorzugsweise monomodal. Die volumengewichtete Partikelgrößenverteilung der Siliciumpartikel ist im Allgemeinen eng, wie aus den $d_{10}$- oder $d_{90}$-Werten sowie $d_{90}$-$d_{10}$-Werten zu ersehen ist.

Die Siliciumpartikel sind vorzugsweise nicht aggregiert, vorzugsweise nicht agglomeriert und/oder vorzugsweise nicht nanostrukturiert. Aggregiert bedeutet, dass sphärische oder weitestgehend sphärische Primärpartikel, wie sie beispielsweise zunächst in Gasphasenprozessen bei der Herstellung der Siliciumpartikel gebildet werden, im weiteren Reaktionsverlauf des Gasphasenprozesses zu Aggregaten zusammenwachsen. Diese Aggregate können im weiteren Reaktionsverlauf Agglomerate bilden. Agglomerate sind eine lose Zusammenballung von Aggregaten. Agglomerate können mit typischerweise eingesetzten Knet- und Dispergierverfahren leicht wieder in die Aggregate aufgespalten werden. Aggregate lassen sich mit diesen Verfahren nicht oder nur teilweise in die Primärpartikel zerlegen. Aggregate und Agglomerate haben auf Grund ihrer Entstehung zwangsläufig ganz andere Sphärizitäten und Kornformen als die erfindungsgemäßen Siliciumpartikel. Das Vorliegen von Siliciumpartikeln in Form von Aggregaten oder Agglomeraten kann beispielsweise mittels herkömmlicher Raster-Elektronen-Mikroskopie (REM) sichtbar gemacht werden. Statische Lichtstreuungsmethoden zur Bestimmung der Teilchengrößenverteilungen oder Partikeldurchmessern von Siliciumpartikeln können dagegen nicht zwischen Aggregaten oder Agglomeraten unterscheiden.

Nicht nanostrukturierte Siliciumpartikel haben im Allgemeinen charakteristische BET-Oberflächen. Die BET-Oberflächen der Siliciumpartikel betragen vorzugsweise 0,01 bis 30,0 m$^2$/g, mehr bevorzugt 0,1 bis 25,0 m$^2$/g, besonders bevorzugt 0,2 bis 20,0 m$^2$/g und am meisten bevorzugt 0,2 bis 18,0 m$^2$/g. Die BET-Oberfläche wird gemäß DIN 66131 (mit Stickstoff) bestimmt.

Die Siliciumpartikel haben eine Sphärizität von vorzugsweise $0,3 \leq \psi \leq 0,9$, besonders bevorzugt $0,5 \leq \psi \leq 0,85$ und am meisten bevorzugt $0,65 \leq \psi \leq 0,85$. Siliciumpartikel mit solchen Sphärizitäten werden insbesondere durch Herstellung mittels Mahlprozessen zugänglich. Die Sphärizität $\psi$ ist das Verhältnis aus der Oberfläche einer Kugel gleichen Volumens zur tatsächlichen Oberfläche eines Körpers (Definition von Wadell). Sphärizitäten können beispielsweise aus herkömmlichen REM-Aufnahmen ermittelt werden.

Bevorzugt werden Siliciumpartikel aus elementarem Silicium eingesetzt, insbesondere da dieses eine vorteilhaft hohe Speicherkapazität für Lithium-Ionen aufweist.

Unter elementarem Silicium ist hochreines Polysilicium, mit geringem Anteil an Fremdatomen (wie beispielsweise B, P, As), gezielt mit Fremdatomen dotiertes Silicium (wie beispielsweise B, P, As), aber auch Silicium aus metallurgischer Verarbeitung, welches elementare Verunreinigung (wie beispielsweise Fe, Al, Ca, Cu, Zr, C) aufweisen kann, zu verstehen.

Die Oberfläche der Siliciumpartikel kann gegebenenfalls durch eine Oxidschicht oder durch andere anorganische und organische Gruppen abgedeckt sein. Besonders bevorzugte Siliciumpartikel tragen auf der Oberfläche Si-OH- oder Si-H-Gruppen oder kovalent angebundene organische Gruppen, wie beispielsweise Alkohole oder Alkene. Durch die organischen Gruppen kann beispielsweise die Oberflächenspannung der Siliciumpartikel gesteuert werden und insbesondere an die Lösemittel oder Bindemittel angepasst werden, die gegebenenfalls bei der Herstellung der Anodenbeschichtungen eingesetzt werden.

Der Siliciumanteil im Anodenmaterial liegt vorzugsweise zwischen 40 Gew.-% und 95 Gew.-%, besonders bevorzugt zwischen 50 Gew.-% und 90 Gew.-% und am meisten bevorzugt zwischen 60 Gew.-% und 80 Gew.-%, bezogen auf das Gesamtgewicht des Anodenmaterials.

Die Siliciumpartikel können beispielsweise durch Mahlprozesse hergestellt werden. Als Mahlprozesse kommen beispielsweise Trocken- oder Nassmahlprozesse in Betracht, wie beispielsweise in DE-A 102015215415 beschrieben.

Das Anodenmaterial basiert vorzugsweise auf einer Mischung umfassend Siliciumpartikel, ein oder mehrere Bindemittel, gegebenenfalls Graphit, gegebenenfalls ein oder mehrere weitere elektrisch leitende Komponenten und gegebenenfalls ein oder mehrere Zusatzstoffe.

Durch Einsatz von weiteren elektrisch leitenden Komponenten im Anodenmaterial können die Übergangswiderstände innerhalb der Elektrode und zwischen Elektrode und Stromableiter reduziert werden, was die Strombelastbarkeit der Lithium-Ionen-Batterie verbessert. Bevorzugte weitere elektrisch leitende Komponenten sind Leitruß, Kohlenstoff-Nanoröhrchen oder metallische Partikel, beispielsweise Kupfer.

Das Anodenmaterial enthält vorzugsweise 0 bis 40 Gew.-%, besonders bevorzugt 0 bis 30 Gew.-% und am meisten bevorzugt 0 bis 20 Gew.-% an einer oder mehreren weiteren elektrisch leitenden Komponenten, bezogen auf das Gesamtgewicht des Anodenmaterials.

Bevorzugte Bindemittel sind Polyacrylsäure oder deren Alkali-Salze, insbesondere Lithium- oder Natrium-Salze, Polyvinylalkohole, Cellulose oder Cellulosederivate, Polyvinylidenfluorid, Polytetrafluorethylen, Polyolefine, Polyimide, insbesondere Polyamidimide, oder thermoplastische Elastomere, insbesondere Ethylen-Propylen-Dien-Terpolymere. Besonders bevorzugt sind Polyacrylsäure, Polymethacrylsäure oder Cellulose-Derivate, insbesondere Carboxymethylcellulose. Besonders bevorzugt sind auch die Alkali-Salze, insbesondere Lithium- oder Natrium-Salze, der vorgenannten Bindemittel. Am meisten bevorzugt sind die Alkali-Salze, insbesondere Lithium- oder Natrium-Salze, der Polyacrylsäure oder der Polymethacrylsäure. Es können sämtliche oder vorzugsweise ein Anteil der Säure-Gruppen eines Bindemittels in Form von Salzen vorliegen. Die Bindemittel haben eine Molmasse von vorzugsweise 100.000 bis 1.000.000 g/mol. Es können auch Gemische von zwei oder mehr Bindemitteln eingesetzt werden.

Als Graphit kann allgemein natürlicher oder synthetischer Graphit eingesetzt werden. Die Graphitpartikel haben bevorzugt eine volumengewichtete Partikelgrößenverteilung zwischen den Durchmesser-Perzentilen $d_{10} > 0,2$ $\mu$m und $d_{90} < 200$ $\mu$m.

Beispiele für Anodenmaterial-Zusatzstoffe sind Porenbildner, Dispergiermittel, Verlaufsmittels oder Dotiermittel, beispielsweise elementares Lithium.

Bevorzugte Rezepturen für das Anodenmaterial der Lithium-Ionen-Batterien enthalten vorzugsweise 5 bis 95 Gew.-%, insbesondere 60 bis 85 Gew.-% Siliciumpartikel; 0 bis 40 Gew.-%, insbesondere 0 bis 20 Gew.-% weitere elektrisch leitende Komponenten; 0 bis 80 Gew.-%, insbesondere 5 bis 30 Gew.-% Graphit; 0 bis 25 Gew.-%, insbesondere 5 bis 15 Gew.-% Bindemittel; und gegebenenfalls 0 bis 80 Gew.-%, insbesondere 0,1 bis 5 Gew.-% Zusatzstoffe; wobei sich die Angaben in Gew.-% auf das Gesamtgewicht des Anodenmaterials beziehen und sich die Anteile aller Bestandteile des Anodenmaterials auf 100 Gew.-% aufsummieren.

In einer bevorzugten Rezeptur für das Anodenmaterial ist der Anteil von Graphitpartikeln und weiteren elektrisch leitenden Komponenten in Summe mindestens 10 Gew.-%, bezogen auf das Gesamtgewicht des Anodenmaterials.

Die Verarbeitung der Bestandteile des Anodenmaterials zu einer Anodentinte bzw. -paste kann beispielsweise in einem Lösungsmittel, wie Wasser, Hexan, Toluol, Tetrahydrofuran, N-Methylpyrrolidon, N-Ethylpyrrolidon, Aceton, Ethylacetat, Dimethylsulfoxid, Dimethylacetamid oder Ethanol, oder Lösungsmittelgemischen vorzugsweise unter Verwendung von Rotor-Stator-Maschinen, Hochenergiemühlen, Planetenknetern, Rührwerkskugelmühlen, Rüttelplatten oder Ultraschallgeräten erfolgen.

Die Anodentinte bzw. -paste weist einen pH-Wert auf von vorzugsweise 2 bis 7,5 (bestimmt bei 20°C, beispielsweise mit dem pH-Meter von WTW pH 340i mit Sonde SenTix RJD).

Die Anodentinte oder -paste kann beispielsweise auf eine Kupferfolie oder einen anderen Stromsammler aufgebracht werden, wie beispielsweise beschrieben in WO 2015/117838.

Die Schichtdicke, das heißt die Trockenschichtdicke der Anodenbeschichtung ist bevorzugt 2 $\mu$m bis 500 pm, besonders bevorzugt von 10 $\mu$m bis 300 $\mu$m.

Eine Lithium-Ionen-Batterie umfasst im Allgemeinen eine erste Elektrode als Kathode, eine zweite Elektrode als Anode, eine zwischen beiden Elektroden angeordnete Membran als Separator, zwei elektrisch leitende Anschlüsse an den Elektroden, ein die genannten Teile aufnehmendes Gehäuse sowie einen Lithium-Ionen enthaltenden Elektrolyten, mit dem der Separator und die beiden Elektroden getränkt sind, wobei ein Teil der zweiten Elektrode das erfindungsgemäße Anodenmaterial enthält.

Der erfindungsgemäße Elektrolyt und erfindungsgemäße Anoden können mit weiteren herkömmlichen Stoffen und Materialien nach bekannten Verfahren zu Lithium-Ionen-Batterien verarbeitet werden, analog wie beispielsweise in der WO 2015/117838 beschrieben.

Überraschenderweise zeigen die erfindungsgemäßen Lithium-Ionen-Batterien ein verbessertes Zyklenverhalten. Die Lithium-Ionen-Batterien haben einen geringen irreversiblen Kapazitätsverlust im ersten Ladezyklus und ein stabiles elektrochemisches Verhalten mit nur geringfügigem Fading in den Folgezyklen. Mit der erfindungsgemäßen Vorgehensweise kann also ein niedriger initialer Kapazitätsverlust und zudem ein niedriger kontinuierlicher Kapazitätsverlust der Lithium-Ionen-Batterien erreicht werden. Insgesamt weisen die erfindungsgemäßen Lithium-Ionen-Batterien eine sehr gute Stabilität auf. Dies bedeutet, dass auch bei einer Vielzahl an Zyklen kaum Ermüdungserscheinungen, wie beispielsweise in Folge von mechanischer Zerstörung des erfindungsgemäßen Anodenmaterials oder SEI auftreten.

Überraschenderweise können mit der erfindungsgemäßen Vorgehensweise Lithium-Ionen-Batterien erhalten werden, die neben dem vorgenannten vorteilhaften Zyklenverhalten zugleich noch eine hohe volumetrische Energiedichte besitzen.

Diese Effekte werden durch ein synergistisches Zusammenwirken der erfindungsgemäßen Teil-Lithiierung sowie der erfindungsgemäßen anorganischen Salze im Elektrolyt erreicht. Durch die bevorzugten Siliciumpartikel können diese Effekte noch weiter gesteigert werden.

Die nachfolgenden Beispiele dienen zur weiteren Erläuterung der Erfindung.

**Beispiel 1:**

Herstellung von Siliciumpartikeln durch Mahlen:

Es wurde eine Mischung aus 2 kg Ethanol (Reinheit 99 %) und 500 g reines Silicium mit einer Partikelverteilung mit d10 = 8 $\mu$m, d50 = 15 $\mu$m und d90 = 25 $\mu$m, die mit einer Fließbettstrahlmühle aus gröberen Partikeln erzeugt wurde, hergestellt und 20 min gerührt, bis der gesamte Feststoff in der Suspension fein verteilt vorlag.

Der Mahlraum einer Labor-Rührwerkskugelmühle Netzsch LabStar LS1 mit Mahlsystem ZETA Keramik wurde mit 490 ml Yttriumoxidstabilisierten Zirkonoxid-Mahlperlen mit einem mittleren Durchmesser von 0,3 mm befüllt und verschlossen. Danach wurde die Suspension aus Siliciumstaub und Ethanol in den gekühlten Ansatzbehälter der Mühle gefüllt und mit einem Durchsatz von 40 kg/h im Kreis durch die Mühle gepumpt. Die Partikel in der Suspension wurden 55 min bei einer Mühlendrehzahl von 3000 U/min gemahlen. Nach dem Mahlvorgang wurde der Suspension Ethanol zugesetzt, bis ihre Feststoffkonzentration 21,8 Gew.-% betrug. Die so erhaltenen Siliciumpartikel waren nicht-aggregiert und splitterförmig. Die Messung der Partikelverteilung durch statische Laserstreuung unter Anwendung des Mie-Modells mit einem Horiba LA 950 in einer stark verdünnten Suspension in Ethanol ergab d10 = 0,26 $\mu$m, d50 = 0,79 $\mu$m und d90 = 2,30 $\mu$m sowie eine Breite (d90-d10) von 2,0 $\mu$m.

**Beispiel 2:**

Anode mit den Siliciumpartikeln aus Beispiel 1:

12,5 g einer 14,4 Gew.-%igen Si-Suspension in Wasser, hergestellt aus Zentrifugat der ethanolischen Si-Suspension aus Beispiel 1, wurden in 0,372 g einer 35 Gew.-%igen Lösung von Polyacrylsäure in Wasser (Sigma-Aldrich, Mw ~250.000 g/mol) und 0,056 g Lithiumhydroxid Monohydrat (Sigma-Aldrich) mittels Dissolver bei einer Umlaufgeschwindigkeit von 4,5 m/s für 5 min und von 17 m/s für 30 min unter Kühlung bei 20°C dispergiert. Nach Zugabe von 0,645 Graphit (Imerys, KS6L C) wurde dann weitere 30 min bei einer Umlaufgeschwindigkeit von 12 m/s gerührt. Nach Entgasen wurde die Dispersion mittels eines Filmziehrahmens mit 0,12 mm Spalthöhe (Erichsen, Modell 360) auf eine Kupferfolie mit Dicke von 0,030 mm (Schlenk Metallfolien, SE-Cu58) aufgebracht. Die so hergestellte Anodenbeschichtung wurde anschließend 60 min bei 80°C und 1 bar Luftdruck getrocknet. Das mittlere Flächengewicht der trockenen Anodenbeschichtung betrug 2,73 mg/cm$^2$.

**Vergleichsbeispiel 3:**

Lithium-Ionen-Batterie mit der Anode aus Beispiel 2, mit Teil-Lithiierung, ohne Lithiumnitrat im Elektrolyt:

Die elektrochemischen Untersuchungen wurden an einer Knopfzelle (Typ CR2032, Hohsen Corp.) in 2-Elektroden-Anordnung durchgeführt. Die Elektrodenbeschichtung aus Beispiel 2 wurde als Gegenelektrode bzw. negative Elektrode (Dm = 15 mm) ausgestanzt, eine Beschichtung auf Basis von Lithium-Nickel-Mangan-Kobaltoxid 1:1:1 mit Gehalt von 94,0 % und mittlerem Flächengewicht von 14,5 mg/cm$^2$ (bezogen von der Firma Custom Cells Itzehoe GmbH, D-25524 Itzehoe) als Arbeitselektrode bzw. positive Elektrode (Dm = 15 mm) verwendet.

Ein mit 80 $\mu$l Elektrolyt getränktes, Glasfaser-Filterpapier (Whatman, GD Type D) diente als Separator (Dm = 16 mm).

Der verwendete Elektrolyt bestand aus einer 1,0-molaren Lösung von Lithiumhexafluorophosphat (LiPF$_6$) in einem 3:7 (v/v) Gemisch von Fluorethylencarbonat (FEC) und Ethylmethylcarbonat (EMC), welche mit 2 Gew.-% Vinylencarbonat (VC) versetzt war. Der Bau der Zelle erfolgte in einer Glovebox (< 1 ppm H$_2$O, O$_2$), der Wassergehalt in der Trockenmasse aller verwendeten Komponenten lag unterhalb von 20 ppm.

Die elektrochemische Testung wurde bei 20°C durchgeführt. Das Laden der Zelle erfolgte im cc/cv-Verfahren (constant current / constant voltage) mit konstantem Strom von 5 mA/g (entspricht C/25) im ersten Zyklus und von 60 mA/g (entspricht C/2) in den darauffolgenden Zyklen und nach Erreichen der Spannungsgrenze von 4,2 V mit konstanter Spannung bis Unterschreiten eines Stroms von 1,2 mA/g (entspricht C/100) bzw. 15 mA/g (entspricht C/8). Das Entladen der Zelle erfolgte im cc-Verfahren (constant current) mit konstantem Strom von 5 mA/g (entspricht C/25) im ersten Zyklus und von 60 mA/g (entspricht C/2) in den darauffolgenden Zyklen bis Erreichen der Spannungsgrenze von 3,0 V. Der gewählte spezifische Strom bezog sich auf das Gewicht der Beschichtung der positiven Elektrode.

Auf Grund der Rezeptierung in den Beispielen 2 und 3 entsprach das Zellbalancing der Lithium-Ionen-Batterie einer Teil-Lithiierung der Anode.

Es wurde die Entladekapazität der Vollzelle von Vergleichsbeispiel 3 in Abhängigkeit von der Zyklenzahl bestimmt.

Die Vollzelle hatte im zweiten Zyklus eine reversible Anfangskapazität von 2,02 mAh/cm$^2$ und

besaß nach 80 Lade-/Entladezyklen noch 80% ihrer ursprünglichen Kapazität.

**Vergleichsbeispiel 4:**

Lithium-Ionen-Batterie mit der Anode aus Beispiel 2, mit Teil-Lithiierung, ohne Lithiumnitrat im Elektrolyt:

Die Anode mit den splitterförmigen Siliciumpartikeln aus Beispiel 2 wurde wie in Beispiel 3 beschrieben getestet, mit dem Unterschied, dass der verwendete Elektrolyt aus einer 1,0-molaren Lösung von Lithiumhexafluorophosphat (LiPF$_6$) in einem 3:7 (v/v) Gemisch von Vinylencarbonat (VC) und Diethylcarbonat (DEC) bestand, welche mit 10,0 Gew.-% Fluoro-dimethyl-silylbutan-nitril (FEC) und 2,0 Gew.-% Tributylamin versetzt war.

Es wurde die Entladekapazität der Vollzelle von Vergleichsbeispiel 4 in Abhängigkeit von der Zyklenzahl bestimmt.

Die Vollzelle hatte im zweiten Zyklus eine reversible Anfangskapazität von 2,08 mAh/cm$^2$ und

besaß nach 106 Lade-/Entladezyklen noch 80% ihrer ursprünglichen Kapazität.

**Beispiel 5:**

Lithium-Ionen-Batterie mit der Anode aus Beispiel 2, mit Teil-Lithiierung und Lithiumnitrat im Elektrolyt:

Die Anode mit den splitterförmigen Siliciumpartikeln aus Beispiel 2 wurde wie in Beispiel 3 beschrieben getestet, mit dem Unterschied, dass der verwendete Elektrolyt aus einer 1,0-molaren Lösung von Lithiumhexafluorophosphat (LiPF$_6$) in einem 1:2 (v/v) Gemisch von Ethylencarbonat (EC) und Diethylcarbonat (DEC) bestand, welche mit 2 Gew.-% Lithiumnitrat versetzt war.

Die Elektrolytlösung war mit Lithiumnitrat gesättigt, was sich an einem farblosen Lithiumnitrat-Bodensatz zeigte. Die tatsächliche Löslichkeit des Lithiumnitrats im eingesetzten Elektrolyten liegt in diesem Beispiel im Bereich von < 0,5 Gew.-%.

Es wurde die Entladekapazität der Vollzelle von Beispiel 5 in Abhängigkeit von der Zyklenzahl bestimmt.

Die Vollzelle hatte im zweiten Zyklus eine reversible Anfangskapazität von 2,02 mAh/cm$^2$ und

besaß nach 140 Lade-/Entladezyklen noch 80 % ihrer ursprünglichen Kapazität.

**Diskussion der Vergleichsbeispiele 3 und 4 sowie von Beispiel 5:**

Die Lithium-Ionen-Batterie aus Beispiel 5 zeigt im Vergleich zu den Lithium-Ionen-Batterien der Vergleichsbeispiele 3 und 4 überraschenderweise ein stabileres elektrochemisches Verhalten im Zyklen-Verlauf.

Dies war umso unerwarteter, als der Elektrolyt von Beispiel 5 nicht die Filmbildungsadditive aus Vergleichsbeispiel 4 enthielt, die für die Bildung einer stabileren SEI-Schicht und damit für einen besseren Zyklenverlauf eingesetzt werden.

Die Zyklenzahl bis zur Unterschreitung eines kontinuierlichen Kapazitätserhalts von 80% im Beispiel 5 übersteigt die der gewählten Referenzelektrolytmischung ausgehend von literaturbekannten Elektrolytzusammensetzungen für Silicium-haltige Anoden [Kawashima, A. et al., Journal of The Electrochemical Society 2011, 158, A798-A801; Aurbach, D. et al., Langmuir 2012, 28, 965-976] (Beispiel 3) um 75%.

Die initiale Kapazität (nach Zyklus 1) liegt für alle drei (Vergleichs)Beispiele in einem ähnlichen Bereich.

**Vergleichsbeispiel 6:**

Lithium-Ionen-Batterie mit Voll-Lithiierung und mit Lithiumnitrat im Elektrolyten:

Analog zu Beispiel 1, jedoch mit einer Mahldauer von 600 min wurden nanoskalige, splitterförmige, nicht-aggregierte Siliciumpartikel hergestellt. Der Feststoffgehalt der Suspension wurde durch Zugabe von Ethanol auf 22,3 Gew.-% eingestellt. Eine Messung der Partikelverteilung ergab eine Größenverteilung mit d10 = 0,09 $\mu$m, d50 = 0,18 $\mu$m und d90 = 0,32 $\mu$m.

Wie in Beispiel 2 beschrieben, wurde aus diesen Partikeln eine Anodenbeschichtung hergestellt. Das mittlere Flächengewicht der trockenen Anodenbeschichtung betrug 2,18 mg/cm$^2$.

Im Anschluss wurden die Anoden wie in Beispiel 3 beschrieben getestet, mit dem Unterschied, dass der verwendete Elektrolyt aus einer 1,0-molaren Lösung von Lithiumhexafluorophosphat (LiPF$_6$) in einem 1:4 (v/v) Gemisch von Propylencarbonat (PC) und Ethylmethylcarbonat (EMC) bestand, welche mit 2 Gew.-% Lithiumnitrat versetzt war.

Die Lithium-Ionen-Batterie wurde unter Voll-Lithiierung betrieben.

Die Vollzelle in Vollbeladung hat im zweiten Zyklus eine reversible Anfangskapazität von nur 1,7 mAh/cm$^2$ und besitzt bereits nach 14 Lade-/Entladezyklen nur noch 80% ihrer ursprünglichen Kapazität.

Der Vergleich von Beispiel 5 und Vergleichsbeispiel 6 zeigt, dass die Zyklenbeständigkeit der Lithium-Ionen-Batterien durch Teil-Lithiierung erheblich gesteigert werden kann.

Durch Zusatz des erfindungsgemäßen anorganischen Salzes Lithiumnitrat zum Elektrolyten kann dieser Effekt noch weiter gesteigert werden, wie die oben diskutierten (Vergleichs)Beispiele 3~5 belegen.

**Patentansprüche**

1.  Lithium-Ionen-Batterien umfassend Kathode, Siliciumpartikel enthaltende Anode, Separator und Elektrolyt, **dadurch gekennzeichnet, dass**

der Elektrolyt ein oder mehrere anorganische Salze enthält ausgewählt aus der Gruppe umfassend Alkali- und Ammonium-Salze von Nitrat und Nitrit; und das Anodenmaterial in der vollständig geladenen Lithium-Ionen-Batterie nur teilweise lithiiert ist, mit der Maßgabe, dass im teilweise lithiierten Anodenmaterial der vollständig geladenen Lithium-Ionen-Batterie das Verhältnis der Lithiumatome zu den Siliciumatomen $\leq 2{,}2$ ist.

2. Lithium-Ionen-Batterien gemäß Anspruch 1, **dadurch gekennzeichnet, dass** im teilweise lithiierten Anodenmaterial der vollständig geladenen Batterie das Verhältnis der Lithiumatome zu den Siliciumatomen $\leq 1{,}98$ ist.

3. Lithium-Ionen-Batterien gemäß Anspruch 1 bis 2, **dadurch gekennzeichnet, dass** der Elektrolyt als anorganisches Salze Lithium-Nitrat enthält.

4. Lithium-Ionen-Batterien gemäß Anspruch 1 bis 3, **dadurch gekennzeichnet, dass** der Elektrolyt die anorganischen Salze zu 0,01 bis 10 Gew.-% enthält, bezogen auf das Gesamtgewicht des Elektrolyten.

5. Lithium-Ionen-Batterien gemäß Anspruch 1 bis 4, **dadurch gekennzeichnet, dass** die Konzentration der anorganischen Salze im Elektrolyt 0,01 bis 2 molar ist.

6. Lithium-Ionen-Batterien gemäß Anspruch 1 bis 5, **dadurch gekennzeichnet, dass** der Elektrolyt neben den anorganischen Salzen zusätzlich ein oder mehrere lithiumhaltige Leitsalze enthält ausgewählt aus der Gruppe umfassend $LiPF_6$, $LiBF_4$, $LiClO_4$, $LiAsF_6$, $(LiB(C_2O_4)_2, LiBF_2(C_2O_4))$, $LiSO_3C_xF_{2x+1}$, $LiN(SO_2C_xF_{2x+1})_2$ und $LiC(SO_2CxF_{2x+1})_3$, wobei x ganzzahlige Werte von 0 bis 8 einnimmt.

7. Lithium-Ionen-Batterien gemäß Anspruch 1 bis 6, **dadurch gekennzeichnet, dass** das molare Verhältnis der lithiumhaltigen Leitsalze zu den anorganischen Salzen ausgewählt aus der Gruppe umfassend Alkali- und Ammonium-Salze von Nitrat und Nitrit 1 zu 1 bis 20 zu 1 beträgt.

8. Lithium-Ionen-Batterien gemäß Anspruch 1 bis 7, **dadurch gekennzeichnet, dass** der Elektrolyt keinen Filmbildner aus der Gruppe umfassend Vinylencarbonat und Fluorethylencarbonat enthält.

9. Lithium-Ionen-Batterien gemäß Anspruch 1 bis 8, **dadurch gekennzeichnet, dass** die Siliciumpartikel der Anode eine volumengewichtete Partikelgrößenverteilung mit Durchmesser-Perzentilen $d_{50}$ von 0,5 bis 10,0 $\mu$m haben.

**Claims**

1. Lithium ion batteries comprising cathode, anode comprising silicon particles, separator and electrolyte, **characterized in that**
the electrolyte comprises one or more inorganic salts selected from the group comprising alkali metal salts and ammonium salts of nitrate and nitrite; and
the anode material in the fully charged lithium ion battery is only partly lithiated,
with the proviso that the ratio of the lithium atoms to the silicon atoms in the partly lithiated anode material of the fully charged lithium ion battery is $\leq 2.2$.

2. Lithium ion batteries according to Claim 1, **characterized in that** the ratio of the lithium atoms to the silicon atoms in the partly lithiated anode material of the fully charged battery is $\leq 1.98$.

3. Lithium ion batteries according to Claim 1 or 2, **characterized in that** the electrolyte contains lithium nitrate as inorganic salt.

4. Lithium ion batteries according to Claim 1 to 3, **characterized in that** the electrolyte contains the inorganic salts to an extent of 0.01% to 10% by weight, based on the total weight of the electrolyte.

5. Lithium ion batteries according to Claim 1 to 4, **characterized in that** the concentration of the inorganic salts in the electrolyte is 0.01 to 2 molar.

6. Lithium ion batteries according to Claim 1 to 5, **characterized in that** the electrolyte contains, as well as the inorganic salts, additionally one or more lithium-containing conductive salts selected from the group comprising $LiPF_6$, $LiBF_4$, $LiClO_4$, $LiAsF_6$, $(LiB(C_2O_4)_2$, $LiBF_2(C_2O_4))$, $LiSO_3C_xF_{2x+1}$, $LiN(SO_2C_xF_{2x+1})_2$ and $LiC(SO_2C_xF_{2x+1})_3$, where x assumes integer values from 0 to 8.

7. Lithium ion batteries according to Claim 1 to 6, **characterized in that** the molar ratio of the lithium-containing conductive salts to the inorganic salts selected from the group comprising alkali metal salts and ammonium salts of nitrate and nitrite is 1:1 to 20:1.

8. Lithium ion batteries according to Claim 1 to 7, **characterized in that** the electrolyte does not contain any film former from the group comprising vinylene carbonate and fluoroethylene carbonate.

9. Lithium ion batteries according to Claim 1 to 8, **characterized in that** the silicon particles of the anode have a volume-weighted particle size distribution having diameter percentiles $d_{50}$ of 0.5 to 10.0 $\mu$m.

**Revendications**

1. Batteries lithium-ions comprenant cathode, anode contenant des particules de silicium, séparateur et électrolyte, **caractérisées en ce que** l'électrolyte contient un ou plusieurs sels inorganiques choisis dans le groupe comprenant des sels d'alcali et d'ammonium de nitrate et de nitrite ; et
le matériau d'anode étant seulement partiellement lithié dans la batterie lithium-ions totalement chargée,
étant entendu que dans le matériau d'anode partiellement lithié de la batterie lithium-ions totalement chargée, le rapport des atomes de lithium sur les atomes de silicium est $\leq 2,2$.

2. Batteries lithium-ions selon la revendication 1, **caractérisées en ce que** dans le matériau d'anode partiellement lithié de la batterie totalement chargée, le rapport des atomes de lithium sur les atomes de silicium est $\leq 1,98$.

3. Batteries lithium-ions selon les revendications 1 et 2, **caractérisées en ce que** l'électrolyte contient du nitrate de lithium en tant que sel inorganique.

4. Batteries lithium-ions selon les revendications 1 à 3, **caractérisées en ce que** l'électrolyte contient les sels inorganiques à raison de 0,01 à 10 % en poids, par rapport au poids total de l'électrolyte.

5. Batteries lithium-ions selon les revendications 1 à 4, **caractérisées en ce que** la concentration des sels inorganiques dans l'électrolyte est de 0,01 à 2 molaire.

6. Batteries lithium-ions selon les revendications 1 à 5, **caractérisées en ce que** l'électrolyte contient de plus, outre les sels inorganiques, un ou plusieurs sels conducteurs contenant du lithium choisis dans le groupe comprenant $LiPF_6$, $LiBF_4$, $LiClO_4$, $LiAsF_6$, ($LiB(C_2O_4)_2$, $LiBF_2(C_2O_4)$), $LiSO_3C_xF_{2x+1}$, $LiN(SO_2C_xF_{2x+1})_2$ et $LiC(SO_2CxF_{2x+1})_3$, x prenant des valeurs entières de 0 à 8.

7. Batteries lithium-ions selon les revendications 1 à 6, **caractérisées en ce que** le rapport molaire des sels conducteurs contenant du lithium sur les sels inorganiques choisis dans le groupe comprenant des sels d'alcali et d'ammonium de nitrate et de nitrite est de 1 sur 1 à 20 sur 1.

8. Batteries lithium-ions selon les revendications 1 à 7, **caractérisées en ce que** l'électrolyte ne contient pas d'agent filmogène du groupe comprenant le carbonate de vinylène et le carbonate de fluoroéthylène.

9. Batteries lithium-ions selon les revendications 1 à 8, **caractérisées en ce que** les particules de silicium de l'anode possèdent une granulométrie pondérée en volume comportant des percentiles de diamètre $d_{50}$ de 0,5 à 10,0 $\mu$m.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7476469 B
- DE 102013210631
- DE 69027143
- US 8551661 B
- US 2006222944 A
- WO 2015160773 A
- WO 2014202529 A
- EP 1730800 A
- US 2003235762 A
- US 2009305129 A
- US 20050214646 A
- JP 4911835 B
- DE 102015215415 A
- WO 2015117838 A

**In der Beschreibung aufgeführte Nicht-Patentliteratur**

- **GU-YEON KIM ; J.R. DAHN.** *Journal of The Electrochemical Society,* 2015, vol. 162 (3), A437-A447
- **ETACHERI, VINODKUMAR et al.** *Langmuir,* 2012, vol. 28, 6175-6184
- **M. GAUTHIER.** *Journal of Power Sources,* 2014, vol. 256, 32-36
- **KAWASHIMA, A. et al.** *Journal of The Electrochemical Society,* 2011, vol. 158, A798-A801
- **AURBACH, D. et al.** *Langmuir,* 2012, vol. 28, 965-976